# EUROPEAN PATENT SPECIFICATION

(11) **EP 3 088 320 B1**
(45) Date of publication and mention of the grant of the patent: **28.02.2018**
(21) Application number: 16167577.2
(22) Date of filing: 28.04.2016
(51) Int. Cl.: B65D 25/28

(54) **CONTAINER FOR FOOD PRODUCTS AND METHOD TO MANUFACTURE IT**
BEHÄLTER FÜR LEBENSMITTELPRODUKTE UND VERFAHREN ZUR HERSTELLUNG DAVON
RÉCIPIENT POUR PRODUITS ALIMENTAIRES ET PROCÉDÉ POUR SA FABRICATION

(30) Priority: 28.04.2015 IT BO20150212
(43) Date of publication of application: 02.11.2016
(73) Proprietor: Siropack Italia S.r.l., Cesenatico (IT)
(72) Inventor: DE LUCIA, Rocco, 47521 CESENA (IT)
(74) Representative: Manconi, Stefano

(56) References cited:
- WO-A2-2013/042051
- US-A- 4 365 725

## Description

The present invention relates to a container for food products.

In the field of manufacturing of containers for food products, it is known to provide a container comprising a basket, which is cup-shaped, is made of a polymer material, and is delimited by a bottom wall and by a side wall closed in a ring around said bottom wall.

The basket is fitted with a handle, which is made of a polymer material, is substantially U-shaped and comprises two free ends connected to the basket by means of respective coupling elements in polymer material welded to the basket through said handle.

The handle is fitted to rotate between a rest position, in which the handle is substantially arranged on the inside of the basket to allow the storage thereof, and an operating position, in which the handle substantially extends outside the basket to allow filling of the container with the relative food product and holding of the container by the user.

Such a prior art basket container is disclosed in WO2013/042051.

Since each coupling element has a substantially cylindrical shape and is engaged in a rotary manner through a substantially circular free end of the handle, the known type of containers for food products of the type described above have some drawbacks mainly deriving from the fact that once moved into its operating position, the handle can rotate again with relative ease into its rest position, compromising the correct filling of the container with the relative food product and the holding thereof by a user.

The object of the present invention is to provide a container for food products which is free of the drawbacks described above and which is simple and inexpensive to implement.

According to the present invention, there is provided a container for food products as claimed in claims 1 to 8.

The present invention further relates to a method to manufacture a container for food products.

According to the present invention, there is provided a method to manufacture a container for food products as claimed in claims 9 to 12.

The present invention will now be described with reference to the accompanying drawings, which illustrate a non-limiting embodiment thereof, in which:
figures 1 and 2 are two perspective schematic views of a preferred embodiment of the container of the present invention shown in two different operating positions;
Figure 3 is a schematic perspective view, with parts removed for clarity, of a detail of the container in figures 1 and 2 shown in three different positions; and
Figure 4 is a schematic front view, with parts removed for clarity, of a variant of the detail in figure 3 shown in three different positions.

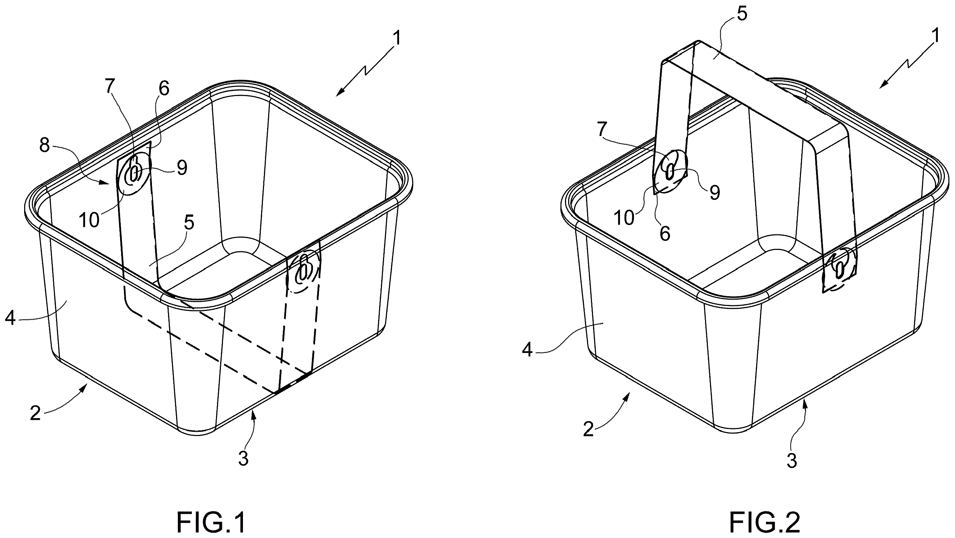

With reference to figures 1 and 2, reference numeral 1 globally denotes a container for food products, for example, fruit and vegetables, comprising a basket 2, which has a cup shape, is delimited by a bottom wall 3, and is further limited by a side wall 4 closed in a ring around said wall 3.

The basket 2 is made of a polymer material, and has an elongated handle 5, which permits the holding of the container 1, and is made of an elastically deformable polymer material identical to, or different from, the polymer material of the basket 2.

The handle 5 is movable between a rest position (figure 1), in which the handle 5 is substantially housed inside the basket 2 to allow the storage of the container 1 by stacking, and an operating position (figure 2), in which the handle 5 extends outside the basket 2 to allow filling of the basket 2 with the food product and holding of said container 1.

The handle 5 is substantially U-shaped and comprises two free ends 6, which are connected to the wall 4, and are each provided with a respective opening 7 made through said handle 5.

Each free end 6 is connected to the wall 4 by means of a coupling element 8 made of a polymer material identical to, or different from, the polymer material of the basket 2 and identical to, or different from, the polymer material of the handle 5.

The element 8 comprises a coupling portion 9 engaged through the relative opening 7, and a circular containment portion 10 placed opposite the wall 4 with respect to the handle 5 to hold the handle 5 on the basket 2 perpendicular to said wall 4.

The portion 9 has an elongated shape delimited by two lateral sides 11 parallel to each other connected to each other by two semicircular ends 12.

Each opening 7 comprises an insertion seat 13 of the portion 9 and a locking seat 14 of said portion 9.

The seat 13 has a circular shape with a larger diameter than the dimensions of the portion 9, and the seat 14 has a shape substantially complementary to the shape of the portion 9.

When the handle 5 is placed in its rest position (figure 1), the seat 14 has a through cross-section having a width W approximating by defect the distance between the lateral sides 11 of the coupling portion 9.

The handle 5 is connected to the basket 2 in its rest position retaining the handle 5 between the wall 4 and the coupling elements 8 and welding each coupling element 8 to the basket 2 through the relative opening 7.

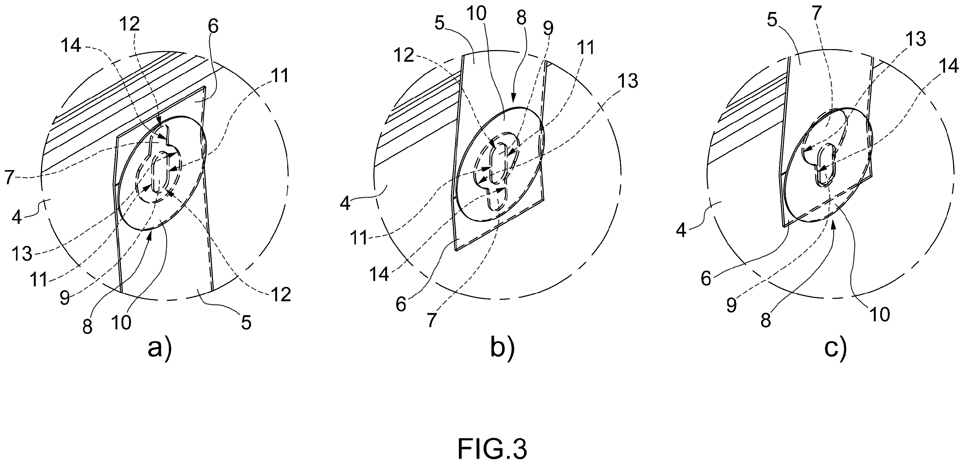

Once the handle 5 is connected to the basket 2, each seat 13 is coupled in a rotary manner to the relative portion 9 and the handle 5 is rotated around the portions 9 from its rest position (figure 3a) to an intermediate position (figure 3b), in which the handle 5 extends outside the basket 2 and each portion 9 faces the relative seat 14.

Subsequently, the handle 5 is translated from its intermediate position (figure 3b) to its operating position (figure 3c) to allow each portion 9 to engage the relative seat 14, elastically deform the relative seat 14, and lock the handle 5 to the basket 2 by interference.

In this case, shown in figures 1, 2 and 3, when the handle 5 is placed in its operating position, the handle 5 is coupled in a fixed angular manner to the basket 2 by a geometric coupling of the portions 9 and corresponding seats 14.

The elastic deformation of the openings 7 and the locking by interference of the handle 5 to the coupling elements 8 obstruct the movement of the handle 5 from its operating position to its rest position, allow the handle 5 to remain in its operating position, and allow a correct filling of the container 1 with the relative food product.

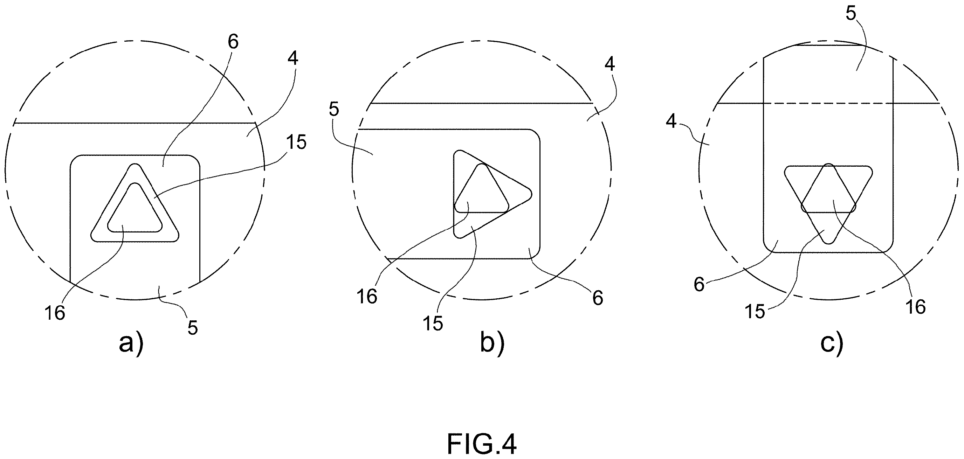

The variant shown in Figure 4 differs from that shown in the preceding figures solely in that each opening 7 is eliminated and replaced with a triangular opening 15 and each coupling portion 9 is eliminated and replaced with a triangular coupling portion 16 presenting a smaller cross-section of the opening 15.

When the handle 5 is placed in its rest position, the sides of the portion 16 are placed parallel to the sides of the opening 15 (Figure 4a).

When the handle 5 is placed in its operating position, the opening 15 is rotated by 180° to the rest position, and has only one side parallel to a corresponding side of the portion 16 (figure 4c).

As a result of the rotation of the handle 5 from its rest position to its operating position (figures 4b and 4c), the opening 15 is elastically deformed by the portion 16 to lock the handle 5 to the coupling elements 8 by interference, obstruct the movement of the handle 5 from its operating position to its rest position, allow the handle 5 to remain in its operating position, and allow a correct filling of the container 1 with the relative food product.

Obviously, according to some variants not shown, the openings 15 and the coupling portions 16 may be of any shape different from those of the case shown in figure 4. In this regard, it should be clarified that the shapes of the openings 15 and the coupling portions 16 will be such that when the handle 5 is placed in its rest position, each opening 15 will always have at least one dimension approximating by defect a corresponding dimension of the relative coupling portion 16 so as to ensure, when the handle 5 is moved into its operating position, an elastic deformation of the opening 15 and locking of the handle 5 to the basket 2 by interference.

According to a further variant not shown, the handle 5 is made of a material, which is different from the polymer material described above, and it is elastically deformable at least at the openings 7, 15.

## Claims

1. A container for food products comprising a basket (2), which is cup-shaped, is delimited by a bottom wall (3) and by a lateral wall (4), and is made of a polymer material; a handle (5) to hold the basket (2), which is substantially U-shaped and has two free ends (6); and two coupling elements (8) to connect the free ends (6) of the handle (5) to the basket (2); each coupling element (8) being made of a polymer material welded to the basket (2), in particular by means of ultrasonic welding; each free end (6) having a respective opening (7; 15) extending around a coupling portion (9; 16) of the relative coupling element (8); and the handle (5) being mounted so as to move between a rest position, in which the handle (5) is substantially arranged on the inside of the basket (2), and an operating position, in which the handle (5) substantially extends on the outside of the basket (2); and **characterized in that** the handle (5) is made, at least in the area of said openings (7; 15), of an elastically deformable polymer material; each opening (7; 15) and the coupling portion (9; 16) of the relative coupling element (8) being configured so as to allow the coupling portion (9; 16), due to the movement of the handle (5) from its rest position to its operating position, to elastically deform the opening (7; 15) and to lock the handle (5) on the basket (2) by interference.

2. A container according to claim 1, wherein, when the handle (5) is arranged in its rest position, each opening (7; 15) has at least one size that approximates by defect a corresponding size of the relative coupling portion (9; 16), so as to make sure that the opening (7; 15) elastically deforms when the handle (5) moves from its rest position to its operating position.

3. A container according to claim 1 or 2, wherein each opening (7) and the coupling portion (9) of the relative coupling element (8) are configured to be coupled to one another in an angularly fixed manner when the handle (5) moves from its rest position to its operating position.

4. A container according to claim 3, wherein each opening (7) has an insertion seat (13) to insert the relative coupling portion (9) through the handle (5) and a locking seat (14) to lock the relative coupling portion (9) in the handle (5).

5. A container according to claim 4, wherein the locking seat (14) has, in a initial configuration of its, a width that approximates by defect a width of the coupling portion (9).

6. A container according to claim 4 or 5, wherein the insertion seat (13) is coupled to the coupling portion (9) in a rotary manner and the locking seat (14) is coupled to the coupling portion (9) in an angularly fixed manner.

7. A container according to any of the claims from 4 to 6, wherein the insertion seat (13) has a substantially circular shape and the locking seat (14) has a substantially straight shape.

8. A container according to claim 1 or 2, wherein each opening (15) and the coupling portion (16) of the relative coupling element (8) substantially have the same shape.

9. A method to manufacture a container for food products comprising a basket (2), which is cup-shaped, is delimited by a bottom wall (3) and by a lateral wall (4), and is made of a polymer material; a handle (5) to hold the basket (2), which is substantially U-shaped and has two free ends (6); the method comprising the steps of:
inserting the handle (5) in a rest position on the inside of the basket (2); and
connecting each free end (6) of the handle (5) to the basket (2) by means of a coupling element (8) made of a polymer material welded to the basket (2), in particular by means of ultrasonic welding, through a corresponding opening (7; 15) of the handle (5); the opening (7; 15) extending around at least a coupling portion (9; 16) of the coupling element (8);
and being **characterized in that** it comprises, furthermore, the step of:
moving the handle (5) from its rest position to an operating position on the outside of the basket (2), so as to allow each coupling portion (9; 16), to elastically deform the relative opening (7; 15) and to lock the handle (5) on the basket (2) by interference.

10. A method according to claim 9, wherein the handle (5) is rotated between its rest and operating positions.

11. A method according to claim 9, wherein the handle (5) is rotated from its rest position to an intermediated position and translated from its intermediate position to its operating position.

12. A method according to claim 11, wherein each opening (7) has an insertion seat (13) to insert the relative coupling portion (9) through the handle (5) and a locking seat (14) to lock the relative coupling portion (9) in the handle (5) ; the handle (5) being moved from its rest position to its intermediate position by rotating the insertion seat (13) on the coupling portion (9) and from its intermediate position to its operating position by translating the locking seat (14) on the coupling portion (9).

## Patentansprüche

1. Behälter für Lebensmittelprodukte, umfassend einen Korb (2), der becherförmig ist, durch eine untere Wand (3) und durch eine seitliche Wand (4) begrenzt ist und aus einem Polymermaterial gefertigt ist; einen Griff (5) zum Halten des Korbs (2), der im Wesentlichen U-förmig ist und zwei freie Enden (6) aufweist; und zwei Kopplungselemente (8) zum Verbinden der freien Enden (6) des Griffs (5) mit dem Korb (2); wobei jedes Kopplungselement (8) aus einem Polymermaterial gefertigt ist, das an den Korb (2) geschweißt ist, insbesondere mittels Ultraschallschweißens; wobei jedes freie Ende (6) eine entsprechende Öffnung (7; 15) aufweist, die sich um einen Kopplungsabschnitt (9; 16) des jeweiligen Kopplungselements (8) herum erstreckt; und wobei der Griff (5) so montiert ist, dass er sich zwischen einer Ruheposition, in der der Griff (5) im Wesentlichen an der Innenseite des Korbs (2) angeordnet ist, und einer Betriebsposition, in der sich der Griff (5) im Wesentlichen an der Außenseite des Korbs (2) erstreckt, bewegt; und **dadurch gekennzeichnet, dass** der Griff (5) mindestens in dem Bereich der Öffnungen (7; 15) aus einem elastisch verformbaren Polymermaterial gefertigt ist; wobei jede Öffnung (7; 15) und der Kopplungsabschnitt (9; 16) des jeweiligen Kopplungselements (8) dazu ausgelegt sind, zu ermöglichen, dass der Kopplungsabschnitt (9; 16) aufgrund der Bewegung des Griffs (5) aus seiner Ruheposition in seine Betriebsposition die Öffnung (7; 15) elastisch verformt und den Griff (5) durch Übermaßpassung an dem Korb (2) einrastet.

2. Behälter nach Anspruch 1, wobei, wenn der Griff (5) in seiner Ruheposition angeordnet ist, jede Öffnung (7; 15) mindestens eine Größe aufweist, die sich einer entsprechenden Größe des jeweiligen Kopplungsabschnitts (9; 16) von unten annähert, um sicherzustellen, dass sich die Öffnung (7; 15) elastisch verformt, wenn sich der Griff (5) aus seiner Ruheposition in seine Betriebsposition bewegt.

3. Behälter nach Anspruch 1 oder 2, wobei jede Öffnung (7) und der Kopplungsabschnitt (9) des jeweiligen Kopplungselements (8) dazu ausgelegt sind, auf winkelstarre Weise aneinandergekoppelt zu werden, wenn sich der Griff (5) aus seiner Ruheposition in seine Betriebsposition bewegt.

4. Behälter nach Anspruch 3, wobei jede Öffnung (7) eine Einsatzaufnahme (13) zum Einsetzen des jeweiligen Kopplungsabschnitts (9) durch den Griff (5) und eine Rastaufnahme (14) zum Einrasten des jeweiligen Kopplungsabschnitts (9) in dem Griff (5) aufweist.

5. Behälter nach Anspruch 4, wobei die Rastaufnahme (14) in einer Anfangsauslegung seiner eine Breite aufweist, die sich einer Breite des Kopplungsabschnitts (9) von unten annähert.

6. Behälter nach Anspruch 4 oder 5, wobei die Einsatzaufnahme (13) auf drehende Weise an den Kopplungsabschnitt (9) gekoppelt ist und die Rastaufnahme (14) auf winkelstarre Weise an den Kopplungsabschnitt (9) gekoppelt ist.

7. Behälter nach einem der Ansprüche 4 bis 6, wobei die Einsatzaufnahme (13) eine im Wesentlichen kreisrunde Form aufweist und die Rastaufnahme (14) eine im Wesentlichen gerade Form aufweist.

8. Behälter nach Anspruch 1 oder 2, wobei jede Öffnung (15) und der Kopplungsabschnitt (16) des jeweiligen Kopplungselements (8) im Wesentlichen die gleiche Form aufweisen.

9. Verfahren zur Herstellung eines Behälters für Lebensmittelprodukte, umfassend einen Korb (2), der becherförmig ist, durch eine untere Wand (3) und durch eine seitliche Wand (4) begrenzt ist und aus einem Polymermaterial gefertigt ist; einen Griff (5) zum Halten des Korbs (2), der im Wesentlichen U-förmig ist und zwei freie Enden (6) aufweist; wobei das Verfahren die folgenden Schritte umfasst:
Einsetzen des Griffs (5) in einer Ruheposition an der Innenseite des Korbs (2); und
Verbinden jedes freien Endes (6) des Griffs (5) mit dem Korb (2) mittels eines Kopplungselements (8), das aus einem Polymermaterial gefertigt ist, das an den Korb (2) geschweißt ist, insbesondere mittels Ultraschallschweißens, durch eine entsprechende Öffnung (7; 15) des Griffs (5); wobei sich die Öffnung (7; 15) um mindestens einen Kopplungsabschnitt (9; 16) des Kopplungselements (8) herum erstreckt;
und **dadurch gekennzeichnet ist, dass** es außerdem den folgenden Schritt umfasst:
Bewegen des Griffs (5) aus seiner Ruheposition in eine Betriebsposition an der Außenseite des Korbs (2), um zu ermöglichen, dass jeder Kopplungsabschnitt (9; 16) die jeweilige Öffnung (7; 15) elastisch verformt und den Griff (5) durch Übermaßpassung an dem Korb (2) einrastet.

10. Verfahren nach Anspruch 9, wobei der Griff (5) zwischen seiner Ruhe- und Betriebsposition gedreht wird.

11. Verfahren nach Anspruch 9, wobei der Griff (5) aus seiner Ruheposition in eine Zwischenposition gedreht wird und aus seiner Zwischenposition in seine Betriebsposition verschoben wird.

12. Verfahren nach Anspruch 11, wobei jede Öffnung (7) eine Einsatzaufnahme (13) zum Einsetzen des jeweiligen Kopplungsabschnitts (9) durch den Griff (5) und eine Rastaufnahme (14) zum Einrasten des jeweiligen Kopplungsabschnitts (9) in dem Griff (5) aufweist; wobei der Griff (5) aus seiner Ruheposition in seine Zwischenposition bewegt wird, indem die Einsatzaufnahme (13) an dem Kopplungsabschnitt (9) gedreht wird, und aus seiner Zwischenposition in seine Betriebsposition, indem die Rastaufnahme (14) an dem Kopplungsabschnitt (9) verschoben wird.

## Revendications

1. Contenant pour produits alimentaires comprenant un panier (2), qui est en forme de cuvette, est délimité par une paroi de fond (3) et par une paroi latérale (4), et est réalisé en un matériau polymère ; une poignée (5) pour tenir le panier (2), qui est sensiblement en forme de U et a deux extrémités libres (6) ; et deux éléments de couplage (8) pour raccorder les extrémités libres (6) de la poignée (5) au panier (2) ; chaque élément de couplage (8) étant réalisé en un matériau polymère soudé au panier (2), notamment par le biais d'un soudage aux ultrasons ; chaque extrémité libre (6) ayant une ouverture (7 ; 15) respective s'étendant autour d'une portion de couplage (9 ; 16) de l'élément de couplage (8) relatif ; et la poignée (5) étant montée de façon à se déplacer entre une position de repos, dans laquelle la poignée (5) est sensiblement agencée sur l'intérieur du panier (2), et une position de fonctionnement, dans laquelle la poignée (5) s'étend sensiblement sur l'extérieur du panier (2) ; et **caractérisé en ce que** la poignée (5) est réalisée, au moins dans la zone desdites ouvertures (7 ; 15), en un matériau polymère élastiquement déformable ; chaque ouverture (7 ; 15) et la portion de couplage (9 ; 16) de l'élément de couplage (8) relatif étant configurées de façon à permettre à la portion de couplage (9 ; 16), en raison du déplacement de la poignée (5) de sa position de repos à sa position de fonctionnement, de déformer élastiquement l'ouverture (7 ; 15) et de bloquer la poignée (5) sur le panier (2) par interférence.

2. Contenant selon la revendication 1, dans lequel, lorsque la poignée (5) est agencée dans sa position de repos, chaque ouverture (7 ; 15) a au moins une taille qui s'approche par défaut d'une taille correspondante de la portion de couplage (9 ; 16) relative, de façon à s'assurer que l'ouverture (7 ; 15) se déforme élastiquement lorsque la poignée (5) se déplace de sa position de repos à sa position de fonctionnement.

3. Contenant selon la revendication 1 ou 2, dans lequel chaque ouverture (7) et la portion de couplage (9) de l'élément de couplage (8) relatif sont configurées pour être couplées l'une à l'autre de manière fixe angulairement lorsque la poignée (5) se déplace de sa position de repos à sa position de fonctionnement.

4. Contenant selon la revendication 3, dans lequel chaque ouverture (7) a un siège d'insertion (13) pour insérer la portion de couplage (9) relative à travers la poignée (5) et un siège de blocage (14) pour bloquer la portion de couplage (9) relative dans la poignée (5).

5. Contenant selon la revendication 4, dans lequel le siège de blocage (14) a, dans sa configuration initiale, une largeur qui s'approche par défaut d'une largeur de la portion de couplage (9).

6. Contenant selon la revendication 4 ou 5, dans lequel le siège d'insertion (13) est couplé à la portion de couplage (9) de manière rotative et le siège de blocage (14) est couplé à la portion de couplage (9) de manière fixe angulairement.

7. Contenant selon l'une quelconque des revendications 4 à 6, dans lequel le siège d'insertion (13) a une forme sensiblement circulaire et le siège de blocage (14) a une forme sensiblement droite.

8. Contenant selon la revendication 1 ou 2, dans lequel chaque ouverture (15) et la portion de couplage (16) de l'élément de couplage (8) relatif ont sensiblement la même forme.

9. Procédé de fabrication d'un contenant pour des produits alimentaires comprenant un panier (2), qui est en forme de cuvette, est délimité par une paroi de fond (3) et par une paroi latérale (4), et est réalisé en un matériau polymère ; une poignée (5) pour tenir le panier (2), qui est sensiblement en forme de U et a deux extrémités libres (6) ; le procédé comprenant les étapes de :
insertion de la poignée (5) dans une position de repos sur l'intérieur du panier (2) ; et
raccordement de chaque extrémité libre (6) de la poignée (5) au panier (2) au moyen d'un élément de couplage (8) réalisé en un matériau polymère soudé au panier (2), notamment par le biais d'un soudage aux ultrasons, à travers une ouverture (7 ; 15) correspondante de la poignée (5) ; l'ouverture (7 ; 15) s'étendant autour au moins d'une portion de couplage (9 ; 16) de l'élément de couplage (8) ;
et étant **caractérisé en ce qu'**il comprend, en outre, l'étape de :
déplacement de la poignée (5) de sa position de repos à une position de fonctionnement sur l'extérieur du panier (2), de façon à permettre à chaque portion de couplage (9 ; 16), de déformer élastiquement l'ouverture (7 ; 15) relative et de bloquer la poignée (5) sur le panier (2) par interférence.

10. Procédé selon la revendication 9, dans lequel la poignée (5) est mise en rotation entre ses positions de repos et de fonctionnement.

11. Procédé selon la revendication 9, dans lequel la poignée (5) est mise en rotation de sa position de repos à une position intermédiaire et translatée de sa position intermédiaire à sa position de fonctionnement.

12. Procédé selon la revendication 11, dans lequel chaque ouverture (7) a un siège d'insertion (13) pour insérer la portion de couplage (9) relative à travers la poignée (5) et un siège de blocage (14) pour bloquer la portion de couplage (9) relative dans la poignée (5) ; la poignée (5) étant déplacée de sa position de repos à sa position intermédiaire par rotation du siège d'insertion (13) sur la portion de couplage (9) et de sa position intermédiaire à sa position de fonctionnement par translation du siège de blocage (14) sur la portion de couplage (9).
